# EUROPEAN PATENT APPLICATION

(11) **EP 4 262 009 A1**
(43) Date of publication of application: **18.10.2023**
(21) Application number: 21928844.6
(22) Date of filing: 15.11.2021
(51) Int. Cl.: H01M 50/574

(54) **BATTERY CLUSTER AND ENERGY STORAGE SYSTEM**

(30) Priority: 02.03.2021 CN 202110228824
(71) Applicant: Sungrow Power Supply Co., Ltd., Hefei, Anhui 230088 (CN)
(72) Inventor: XU, Erchao, Hefei, Anhui 230088 (CN); TAO, Wenyu, Hefei, Anhui 230088 (CN)
(74) Representative: Rooney, John-Paul
(86) International application number: PCT/CN2021/130614
(87) International publication number: WO 2022/183772

(57) **Abstract**

Provided in the present invention are a battery cluster and an energy storage system, which are applied to the technical field of energy storage. The battery cluster comprises a plurality of battery packs and at least one first fuse, wherein each battery pack is connected to each first fuse in series, so as to form a series branch, and the obtained series branch is connected to a switch box provided with a second fuse. By means of the battery cluster provided in the present invention, at least one first fuse is connected in series in the battery cluster, and the first fuse matches a second fuse in a switch box, so as to realize dual protection; and when the second fuse in the switch box fails, protection can be realized depending on the first fuse, such that the fuse protection reliability is effectively improved, and the safe operation of the battery cluster and the energy storage system is ensured.

## Description

This application claims priority to Chinese Patent Application No. 202110228824.4, titled "BATTERY CLUSTER AND ENERGY STORAGE SYSTEM", filed on March 2, 2021 with the China National Intellectual Property Administration, which is hereby incorporated by reference in its entirety.

### FIELD

The present disclosure relates to the technical field of energy storage, and in particular to a battery cluster and an energy storage system.

### BACKGROUND

In the conventional technology, a battery cluster at least includes multiple battery cells, and the battery cells are connected in series and connected to a switch box, and then connected to a downstream battery combiner cabinet through the switch box. In order to prevent the failure of any one of the battery clusters from affecting the safe operation of other battery clusters in the energy storage system, or even the entire energy storage system, fuses are arranged in the switch box. When the battery cluster connected to the switch box occurs a short circuit or malfunctions, the malfunctioned battery cluster is disconnected from the energy storage system via the action of the fuse in the switch box, thereby eliminating the malfunction becoming worse.

However, based on the above description, once the fuse in the switch box is in a fault state, the fuse cannot act reliably when the battery cluster malfunctions, which is difficult to protect the battery clusters effectively, even affecting the safe operation of the entire energy storage system.

### SUMMARY

A battery cluster and an energy storage system are provided according to the present disclosure. A first fuse is arranged in series in the battery cluster, which cooperates with a second fuse in the switch box to realize double protection. When the second fuse in the switch box is in a fault state, the protection can be realized by means of the first fuse, thereby ensuring the safe operation of the battery cluster and the energy storage system.

In order to achieve the above object, the technical solutions according to the present disclosure are provided as follows.

In a first aspect, a battery cluster is provided according to the present disclosure, the battery cluster includes: a plurality of battery cells and at least one first fuse; wherein,
the plurality of battery cells are connected to the at least one first fuse in series to form a series branch; and
the series branch is connected to a switch box provided with a second fuse.

In an embodiment, the second fuse in the switch box is blown prior to the first fuse in a case that a malfunction occurs .

In an embodiment, a rated blowing current of the first fuse is the same as a rated blowing current of the second fuse, and a blowing sensitivity of the first fuse is less than a blowing sensitivity of the second fuse.

In an embodiment, a rated blowing current of the first fuse is greater than a rated blowing current of the second fuse .

In an embodiment, the plurality of battery cells are divided into a plurality of battery packs, and each battery pack includes at least one battery cell;
the battery cells in each battery pack are connected in series to form a battery string;
the battery strings are connected in series; and
at least one first fuse is connected in series between at least one pair of adjacent battery strings.

In an embodiment, the battery cells are arranged on a battery rack, and battery cells in a same battery pack are located in a same column; and
the at least one first fuse is connected in series between two battery strings in adjacent columns on the battery rack.

In an embodiment, in a case that a quantity of the at least one first fuse is greater than one, at least one first fuse is connected in series in at least one battery string.

In an embodiment, the plurality of battery cells are divided into a plurality of battery packs, and each battery pack includes at least one battery cell;
the battery cells in each battery pack are connected in series to form a battery string;
the battery strings are connected in series; and
at least one first fuse is connected in series in at least one battery string.

In an embodiment, in an assembly process of the battery cluster, the first fuse is connected to the battery cells before connecting the battery cells to each other.

In an embodiment, a positive output cable and a negative output cable of the battery cluster are connected to the battery cells after connecting the first fuse to the battery cells in the battery cluster.

In an embodiment, the negative output cable is connected to the battery cells before connecting the positive output cable to the battery cells.

In a second aspect, an energy storage system is provided according to the present disclosure, the energy storage system includes: a battery combiner cabinet BCP; an energy storage inverter PCS; and at least one battery cluster according to any one of the above first aspect of the present disclosure, wherein:
each battery cluster is connected to a terminal of the BCP; and
another terminal of the BCP is connected to a power grid through the PCS.

In an embodiment, in a case that the battery cluster includes a switch box, the switch box in the battery cluster is connected to the BCP; and

in a case that the battery cluster does not include the switch box, the energy storage system includes the switch box, and the switch box is connected in series between the battery cluster and the BCP.

According to the present disclosure, the battery cluster includes a plurality of battery cells and at least one first fuse; the plurality of battery cells and the at least one first fuse are connected in series to form a series branch; and the series branch is connected to a switch box provided with a second fuse. With the battery cluster provided by the present disclosure, at least one first fuse is connected in series in the battery cluster, and the first fuse cooperates with the second fuse in the switch box to achieve double protection. When the second fuse in the switch box fails, the protection can also be realized by means of the first fuse, thereby effectively improving the reliability of the fuse protection and ensuring the safe operation of the battery cluster and the energy storage system.

### BRIEF DESCRIPTION OF THE DRAWINGS

In order to explain the technical solutions in the embodiments of the present disclosure or in the conventional technology, the drawings used in the description of the embodiments or the conventional technology are briefly introduced hereinafter. It is apparent that the drawings in the following description illustrate only embodiments of the present disclosure. Other drawings may be obtained by those skilled in the art without creative efforts based on the provided drawings.
Figure 1 is a schematic structural diagram of a battery cluster according to an embodiment of the present disclosure;
Figure 2 is a schematic structural diagram of a battery cluster according to another embodiment of the present disclosure;
Figure 3 is a schematic installation diagram of a battery cluster according to an embodiment of the present disclosure;
Figure 4 is a schematic installation diagram of a battery cluster according to another embodiment of the present disclosure;
Figure 5 is a schematic structural diagram of a battery cluster according to yet another embodiment of the present disclosure;
Figure 6 is a schematic installation diagram of a battery cluster according to yet another embodiment of the present disclosure;
Figure 7 is performance curves of fuses according to an embodiment of the present disclosure;
Figure 8 is performance curves of fuses according to another embodiment of the present disclosure; and
Figure 9 is a schematic structural diagram of an energy storage system according to an embodiment of the present disclosure.

### DETAILED DESCRIPTION OF EMBODIMENTS

The technical solutions in the embodiments of the present disclosure will be described below in conjunction with the drawings in the embodiments of the present disclosure. It is apparent that the described embodiments are only part of the embodiments of the present disclosure, rather than all of them. Based on the embodiments of the present disclosure, all other embodiments obtained by the skilled in the art without making creative efforts belong to the protection scope of the present disclosure.

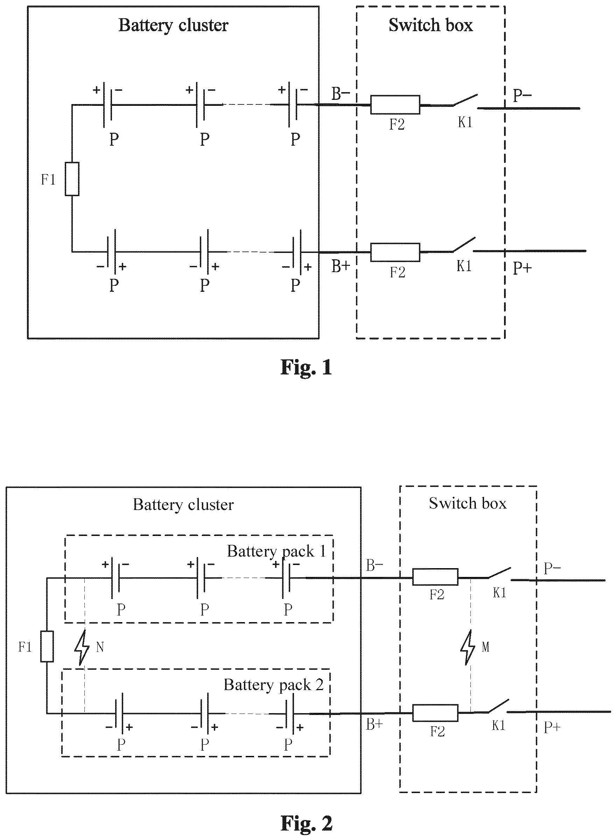

Referring to Figure 1, which is a schematic structural diagram of a battery cluster according to an embodiment of the present disclosure. The battery cluster provided in this embodiment includes multiple battery cells P and at least one first fuse F1 (one first fuse F1 is shown in Figure 1 as an example).

The battery cells P and the first fuses F1 are connected in series to form a series branch. The series branch is connected to the switch box. There are two current transmission paths in the switch box, and each current transmission path includes a second fuse F2 and a direct current switch K1 connected in series. As shown in Figure 1, the two terminals of the positive transmission path are shown as B+ and P+, the two terminals of the negative transmission path are shown as B- and P-, and the series branch formed by the series connection of the battery cells P can be connected externally through the switch box.

It should be noted that in the embodiment shown in Figure 1, the battery cluster and the switch box are two independent parts. In practical applications, the switch box may be integrated into the battery cluster, i.e., the battery cluster further includes a switch box on the basis of the embodiment as shown in Figure 1. An illustration for such structure is not shown herein, and the details can be implemented with reference to the conventional technology, which will not be separately described in subsequent embodiments. Nevertheless, it should be emphasized that the switch box must provide with a second fuse F2 regardless of whether the switch box is integrated in the battery cluster.

In the battery cluster provided by the embodiments of the present disclosure, at least one first fuse is connected in series in the battery cluster. The first fuse cooperates with the second fuse in the switch box to achieve double protection. In a case that the second fuse fails to provide effective short-circuit protection, the first fuse can be relied on for protection, thereby effectively improving the reliability of the fuse protection and ensuring the safe operation of the battery cluster and the energy storage system.

The arrangement position of the first fuse in the battery cluster is described below.

In an embodiment, referring to Figure 2, which is a schematic structural diagram of a battery cluster according to another embodiment of the present disclosure. On the basis of the embodiment shown in Figure 1, in the battery cluster provided by the embodiment, the battery cells P in the battery cluster are divided into multiple battery packs (battery pack 1 and battery pack 2 shown in Figure 2), and each battery pack includes at least one battery cell P.

The battery cells P in each battery pack are connected in series to form a battery string. And then the obtained battery strings are connected in series to form the series branch described in the foregoing embodiment. In addition, the two terminals of the series branch are connected to the switch box provided with the second fuse F2.

The battery cluster includes at least one first fuse F1. After dividing into multiple battery packs, at least one first fuse F1 is connected in series between at least one pair of battery strings connected to each other. As shown in Figure 2, a first fuse F1 is connected in series between the battery pack 1 and the battery pack 2. In a case that the battery cluster further includes a battery pack 3, a first fuse F1 may be connected in series between the battery pack 2 and the battery pack 3. Alternatively, there may be no first fuse F1 that is connected in series between the battery pack 2 and the battery pack 3 and the first fuse F1 is only connected in series between the battery pack 1 and the battery pack 2.

It is further conceivable that two or more first fuses F1 may be connected in series between battery packs in order to improve the operational safety of the battery cluster, if the cost is not the main consideration. Those arrangements may also be allowed, and do not exceed the scope of the concept of the present disclosure, that is, are within the protection scope of the present disclosure.

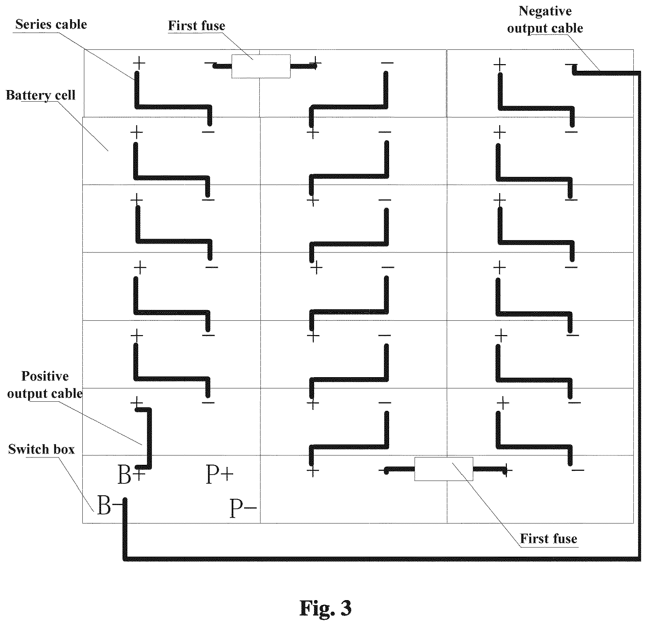

In practical applications, the battery cells in the battery cluster are installed on the battery rack collectively. In order to facilitate the connection between the battery cells, the battery cells are often placed in multiple rows and columns as a matrix on the battery rack. Referring to Figure 3, which is a schematic installation diagram of a battery cluster according to an embodiment of the present disclosure. The battery cells are placed on the battery rack (the structure of the battery rack is not shown in the figure, which can refer to conventional technology) in a matrix. On the basis of dividing the battery cells into multiple battery packs in the embodiment shown in Figure 2, the battery cells in the same battery pack are located in the same column during installation of the battery packs.

The first fuse is connected in series between two battery strings in adjacent columns on the battery rack. As shown in Figure 3, the first fuses are respectively connected in series between the first column and the second column, and between the second column and the third column from the left. Alternatively, as described above, there may be only one first fuse, without the other first fuse shown in the embodiment shown in Figure 3.

In addition, connection manners between the battery cells and between the battery cells and the switch box are shown in Figure 3. For convenience of description, the connections between the battery cells are shown in series cables. After the battery cells and the first fuses are connected in series, the positive terminal of the series branch is connected to the connection point B+ of the switch box through a positive output cable. The negative terminal of the series branch is connected to the connection point B- of the switch box through a negative output cable.

Based on the embodiments shown in Figure 2 and Figure 3, the first fuse(s) is only connected in series between the battery packs obtained by dividing the battery cluster, rather than adding a first fuse for each battery cell. In this way, it can effectively improve the reliability of the fuse protection and ensure the safe operation of the battery cluster and the energy storage system with a reduced number of first fuses, which is beneficial to cost control of the battery cluster.

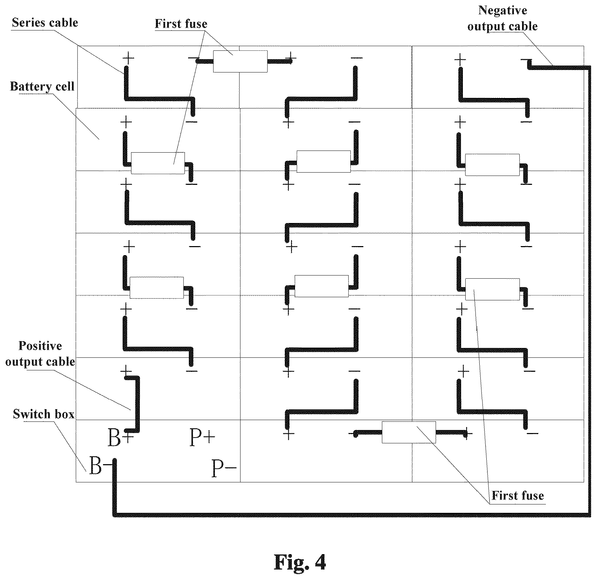

In an embodiment, in a case that multiple first fuses are included in the battery cluster, the battery cluster may be installed in an installation manner shown in Figure 4. On the basis of the embodiment shown in Figure 3, at least one first fuse is connected in series in at least one battery string. As shown in Figure 4, one or more first fuses may be connected in series between battery cells in a same column.

It should be noted that the first fuses between columns or the first fuses in the same column should have a same specification.

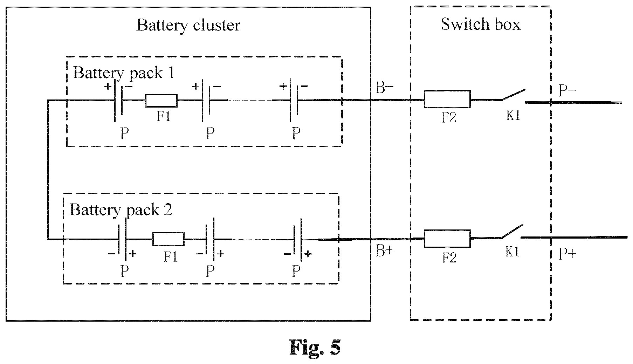

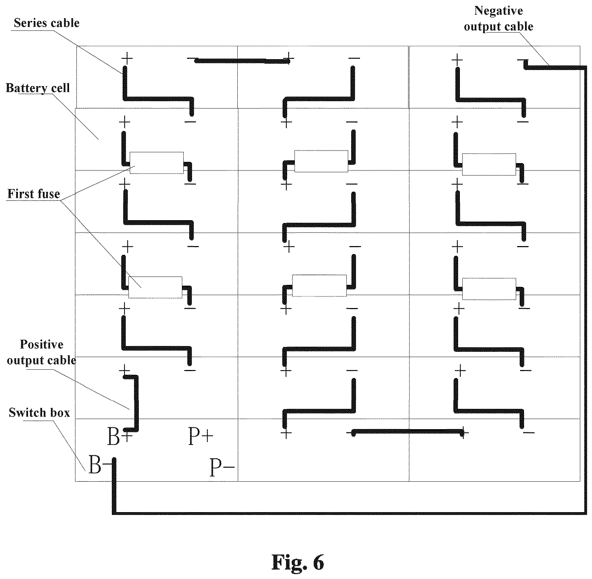

In an embodiment, referring to Figures 5 and 6, where Figure 5 illustrates a schematic structural diagram of a battery cluster according to yet another embodiment of the present disclosure, and Figure 6 illustrates a schematic installation diagram of the battery cluster according to the embodiment shown in Figure 5.

Similar to the embodiment shown in Figure 2, the battery cells in the battery cluster are divided into multiple battery packs, and each battery pack includes at least one battery cell P, such as the battery pack 1 and the battery pack 2 shown in Figure 5. The battery cells Pin each battery pack are connected in series to form a battery string, and the battery strings are connected to each other in series. This embodiment differs from the embodiment shown in Figure 2 in that at least one first fuse F1 is connected in series within at least one battery pack.

After the battery cells are installed on the battery rack and arranged in a matrix as shown in Figure 6, the battery cells in the same column belong to a same battery pack, i.e., the battery cells in each column are divided into a same battery pack. In this embodiment, the first fuses are connected in series only between the battery cells in the same column, instead of providing them between the battery cells in different columns.

The selection of the first fuse and the second fuse is described below based on the battery cluster according to any of the above embodiments.

In order to effectively realize hierarchical protection, one principle for selecting the first fuse and the second fuse is that, the second fuse in the switch box is blown before the first fuse in the battery cluster, while the battery cells in the battery cluster can be protected via the first fuse when the second fuse in the switch box malfunctions, to prevent the accident from becoming even worse.

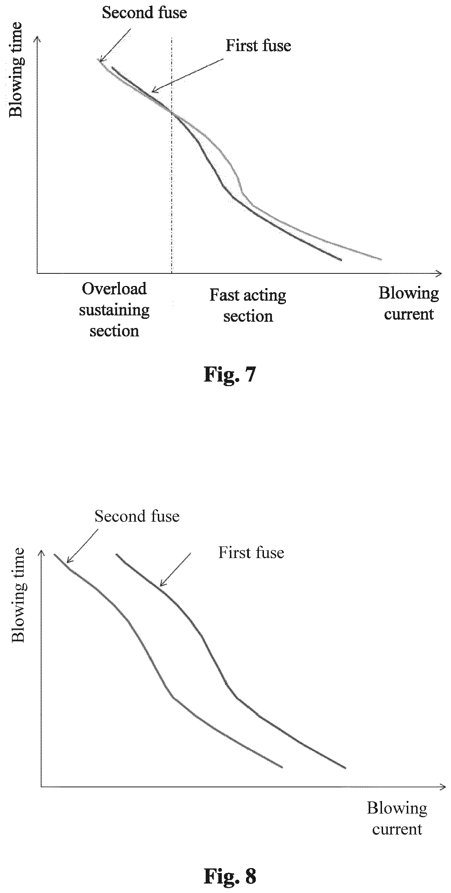

Based on the above principles, two ways for parameter setting are provided. One way is that the rated blowing current of the first fuse is the same as the rated blowing current of the second fuse, and the blowing sensitivity of the first fuse is less than the blowing sensitivity of the second fuse. In this case, the performance curves of the first fuse and the second fuse may refer to Figure 7. In an embodiment, the first fuse may be a GPV class fuse with both overload breaking capacity and short-circuit protection breaking capacity, while the second fuse may be an AR class fuse.

The second way is that the rated blowing current of the first fuse is greater than the rated blowing current of the second fuse. The first fuse and the second fuse are of the same type. In this case, the performance curves of the first fuse and the second fuse may refer to Figure 8.

In the assembly process of the battery cluster, short-circuit may occurs and causes an installation accident in the following cases: the connecting piece, series cable or installation tool is connected between the positive electrode and the negative electrode of the same battery cell, or connected between the positive electrode and the negative electrode of the series branch formed by two adjacent battery cells connected in series, or the positive electrode and the negative electrode of the battery cell are connected to the battery rack simultaneously.

In order to solve this problem, the installation order of the battery cluster provided in the above embodiments is defined according to an embodiment of the present disclosure.

After the battery cells are placed on the battery rack, both terminals of the first fuse are installed with connectors, which are then secured at preset installation positions of the battery rack. Then the battery cells in the battery cluster are connected in sequence according to the series relationship between the battery cells, with ensuring that the first fuse is connected to the battery cells before connecting the battery cells to each other.

Further, after connecting the first fuses and the battery cells in the battery cluster, the positive output cable and the negative output cable of the battery cluster are connected. Specifically, the negative output cable is first connected and then the positive output cable is connected, to prevent the pulse peak voltage during connection from damaging the control circuit in the chip.

By assembling the battery cluster in the above connection order, even if any of the above short-circuit cases occurs during the assembly process, since the first fuse(s) has been installed, the overall safety of the battery cluster can be effectively guaranteed via the first fuse(s).

Further, when in use, there are mainly two places where the short-circuit fault of the battery cluster may occur, i.e., at M and N in the embodiment shown in Figure 2. Similarly, the places in high probability of occurrence of short-circuit faults in the embodiment shown in Figure 5 are the same as the places shown in Figure 2, which will not be described in conjunction with illustrations here. Details of which are as shown in Figure 2.

Taking the embodiment shown in Figure 3 as an example, when a short-circuit fault occurs at M, the second fuse in the switch box is blown before the first fuse on the battery rack, to realize hierarchical protection. When a short-circuit fault occurs at N, protection can be provided by the first fuse between columns.

Taking the embodiment shown in Figure 4 as an example, compared with the embodiment shown in Figure 3, in addition to providing hierarchical protection and short-circuit protection at N, the arrangement manner of the fuses in Figure 4 can reduce arc flash damage effectively, ant thus the protection level of personal protective equipment can be reduced.

As for the embodiment shown in Figures 5 and 6, the first fuse is not arranged between columns, thus the protection effects may be not as good as that of the embodiment shown in Figures 3 and 4 when a short-circuit fault occurs at N.

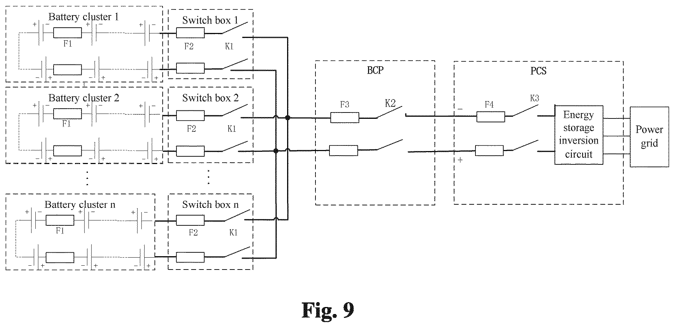

In an embodiment, referring to Figure 9, which is a schematic structural diagram of an energy storage system according to an embodiment of the present disclosure. The energy storage system provided by this embodiment includes: a battery combiner cabinet BCP, an energy storage inverter PCS, and at least one battery cluster provided in any one of the above embodiments.

Each battery cluster is connected to a terminal of the BCP

Another terminal of the BCP is connected to a power grid through the PCS.

In an embodiment, in a case that the battery cluster includes a switch box, the switch box in the battery cluster is connected to the BCP.

In a case that the battery cluster does not include a switch box, the energy storage system includes a switch box, and the switch box is connected in series between the battery cluster and the BCP.

Each embodiment in this specification is described in a progressive manner, each embodiment focuses on the difference from other embodiments, and the same and similar parts of each embodiment can be referred to each other. For the device disclosed in the embodiment, since it corresponds to the method disclosed in the embodiment, the description is relatively simple. The related information can refer to the description of the method part.

Professionals can further realize that the exemplary units and algorithm steps described in conjunction with the embodiments disclosed herein can be implemented by electronic hardware, computer software or a combination of the two. In order to clearly illustrate the interchangeability of the hardware and software, the compositions and steps of each example have been generally described according to their functions in the above description. Whether these functions are implemented by hardware or software depending on the specific application and design constraints of the technical solutions. Those skilled in the art may use different methods to implement the described functions for each specific application, but such implementations should not be regarded as beyond the scope of the present disclosure.

The steps of the methods or algorithms described in conjunction with the embodiments disclosed herein may be directly implemented by hardware, software modules executed by a processor, or a combination of both. Software modules can be placed in a random access memory (RAM), internal memory, read-only memory (ROM), electrically programmable ROM, electrically erasable programmable ROM, register, hard disk, removable disk, CD-ROM, or a storage medium in any other forms known in the technical field.

Those skilled in the art can implement or utilize the present disclosure according to the above description of the disclosed embodiments. Various modifications to these embodiments will be obvious to those skilled in the art, and the general principles defined herein may be implemented in other embodiments without departing from the spirit or scope of the present disclosure. Hence, the present disclosure will not be limited to the embodiments shown herein, rather, protect the widest scope that is consistent with the principles and novel features disclosed herein.

## Claims

1. A battery cluster, comprising:
a plurality of battery cells; and
at least one first fuse; wherein,
the plurality of battery cells and the at least one first fuse are connected in series to form a series branch; and
the series branch is connected to a switch box provided with a second fuse.

2. The battery cluster according to claim 1, wherein the second fuse in the switch box is blown prior to the first fuse in a case that a malfunction occurs.

3. The battery cluster according to claim 2, wherein a rated blowing current of the first fuse is the same as a rated blowing current of the second fuse, and a blowing sensitivity of the first fuse is less than a blowing sensitivity of the second fuse.

4. The battery cluster according to claim 2, wherein a rated blowing current of the first fuse is greater than a rated blowing current of the second fuse.

5. The battery cluster according to claim 1, wherein the plurality of battery cells are divided into a plurality of battery packs, and each battery pack comprises at least one battery cell;
the battery cells in each battery pack are connected in series to form a battery string; battery strings are connected in series; and
at least one first fuse is connected in series between at least one pair of adjacent battery strings.

6. The battery cluster according to claim 5, wherein the battery cells are arranged on a battery rack, and battery cells in a same battery pack are located in a same column; and
the at least one first fuse is connected in series between two battery strings in adjacent columns on the battery rack.

7. The battery cluster according to claim 5, wherein in a case that a quantity of the at least one first fuse is greater than one, at least one first fuse is connected in series in at least one battery string.

8. The battery cluster according to claim 1, wherein the plurality of battery cells are divided into a plurality of battery packs, and each battery pack comprises at least one battery cell;
the battery cells in each battery pack are connected in series to form a battery string; battery strings are connected in series; and
at least one first fuse is connected in series in at least one battery string.

9. The battery cluster according to any one of claims 1-8, wherein, in an assembly process of the battery cluster, the first fuse is connected to the battery cells before connecting the battery cells to each other.

10. The battery cluster according to claim 9, wherein a positive output cable and a negative output cable of the battery cluster are connected to the battery cells after connecting the first fuse to the battery cells in the battery cluster.

11. The battery cluster according to claim 10, wherein the negative output cable is connected to the battery cells before connecting the positive output cable to the battery cells.

12. An energy storage system, comprising:
a battery combiner cabinet (BCP);
an energy storage inverter (PCS); and
at least one battery cluster according to any one of claims 1-11, wherein:
each battery cluster is connected to a terminal of the BCP; and
another terminal of the BCP is connected to a power grid through the PCS.

13. The energy storage system according to claim 12, wherein, in a case that the battery cluster comprises a switch box, the switch box in the battery cluster is connected to the BCP; and
in a case that the battery cluster does not comprise the switch box, the energy storage system comprises the switch box, and the switch box is connected in series between the battery cluster and the BCP.
